Europäisches Patentamt

European Patent Office

Office européen des brevets

(11) Publication number: **0 175 974**
**B1**

(12) **EUROPEAN PATENT SPECIFICATION**

(45) Date of publication of patent specification: **27.12.89**

(51) Int. Cl.⁴: **G 21 C 3/32**

(21) Application number: **85111202.9**

(22) Date of filing: **05.09.85**

(54) Apparatus for removing a top nozzle in reconstituting a fuel assembly.

(30) Priority: **26.09.84 US 654708**

(43) Date of publication of application:
**02.04.86 Bulletin 86/14**

(45) Publication of the grant of the patent:
**27.12.89 Bulletin 89/52**

(84) Designated Contracting States:
**BE DE FR GB IT SE**

(56) References cited:
**EP-A-0 066 695**
**EP-A-0 082 075**
**EP-A-0 109 902**
**FR-A-2 533 741**
**US-A-4 358 421**

(73) Proprietor: **WESTINGHOUSE ELECTRIC CORPORATION**
**Westinghouse Building Gateway Center**
**Pittsburgh Pennsylvania 15222 (US)**

(72) Inventor: **Shallenberger, John Milton**
**120 W. Chapel Ridge Road**
**Pittsburgh Pennsylvania 15238 (US)**
Inventor: **Ferlan, Stephen Joseph**
**895 Rita Drive**
**Pittsburgh Pennsylvania 15221 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for nuclear reactors and, more particularly, to an apparatus for removing a top nozzle as a first step in reconstituting a fuel assembly.

Conventional designs of fuel assemblies include a plurality of fuel rods and control-rod guide thimbles held in an organized array by grids spaced along the fuel assembly and attached to the control-rod guide thimbles. Top and bottom nozzles on opposite ends of the fuel assembly are secured to the control-rod guide thimbles which extend slightly above and below the ends of the fuel rods. At the top end of the fuel assembly, the guide thimbles are attached to the adapter plate of the top nozzle either directly or through the intermediary of sleeves.

During operation of such fuel assembly in a nuclear reactor, some of the fuel rods may develop cracks in their cladding due primarily to internal stresses, in which event radioactive fission products may seep into the primary coolant of the reactor. Such products might also be released into a flooded reactor cavity during refueling operations, or into the coolant circulated through pools where the spent fuel assemblies are stored. Since the fuel rods are part of an integral assembly of guide thimbles welded to the top and bottom nozzles, it is difficult to detect and remove failed rods.

Until recently, in order to gain access to these rods, it was necessary to remove the affected assembly from the nuclear reactor core and then break the welds which secure the nozzles to the control-rod guide thimbles. In so doing, the destructive action often rendered the fuel assembly unfit for further use in a reactor because of the damage done to both the guide thimbles and the nozzles which prohibits rewelding.

A method for reconstituting a fuel assembly as disclosed in EP—A—0,066,695 was recently devised which does not involve the breaking of welds between the guide thimbles and the adapter plate of the top nozzle. Instead, the guide thimbles are severed from the adapter plate by circumferentially cutting each thimble just below the attachment area, whereupon the top nozzle can be removed from the cut guide thimbles to expose the upper ends of the fuel rods for inspection and/or removal and replacement or for transferring partially spent fuel rods from one assembly to another and/or rearranging fuel rods to attain better uranium utilization in the reactor core. Once inspection, removal, replacement and/or rearrangement of the fuel rods is completed, a new top nozzle having an adapter plate containing modified guide thimble passageways is placed on the cut guide thimbles, and the upper ends of the thimbles are circumferentially bulgefitted into annular grooves formed in the passageways.

While the fuel assembly reconstitution method described above has demonstrated considerable promise as a measure by which utilities can minimize both operating and maintenance expenses, there is a need for improvement in the manner in which the fuel assemblies being reconstituted are prepared for the refitting with new top nozzles.

It is the principal object of the invention to satisfy this need. The manner in which the invention attains its objective is based upon a recognition that it is not only essential to cut with precision each individual guide thimble but is of equal or perhaps even greater importance to cut all of the guide thimbles in a single, common plane intersecting the guide thimbles, or structural tubes, at the same axial height. This has been most difficult, if not impossible, to reliably accomplish with cutters individually moved and positioned to perform successive cutting operations on different guide thimbles, and as a consequence thereof there have been problems with properly fitting new top nozzles onto the cut thimbles.

Accordingly, the invention resides in apparatus for separating an upper end structure of a nuclear fuel assembly from upright tubes forming part of the fuel assembly and having upper end portions thereof inserted in passageways formed through a structural plate which is a unitary part of the end structure and is rigidly connected to the upright tubes adjacent the uppermost ends thereof, said apparatus being adapted for use with elongate tube cutters insertable into said upright tubes and including cutting elements which are operable to cut circumferentially through the tubes, characterized by a cutter guide fixture comprising a mounting and reference structure including means for mounting the guide fixture on top of, and for releasably locking it to, said upper end structure; a cutter carriage which is movable between a cutterinserted position and a cutter-withdrawn position and includes means for mounting the elongate tube cutters on the carriage in a manner and in positions such that any tube cutter on the carriage will move axially together and in unison therewith and be in axial alignment with one of said passageways in the structural plate when the guide fixture is mounted on the end structure, and that, furthermore, the cutting elements of all cutters on the carriage are laterally aligned with respect to each other; and actuating means operable to effect movement of the cutter carriage between said cutter-inserted and cutter-withdrawn positions thereof and thereby, when the guide fixture is mounted on the end structure, to effect insertion and withdrawal, respectively, of the cutters into and from the tube end portions within the respective passageways aligned therewith; said mounting and reference structure including a reference means cooperable with the cutter carriage to terminate movement thereof to its cutter-inserted position when the cutter elements of all cutters are disposed in a common plane intersecting said tube end portions below their points of rigid connection with said structural plate.

This apparatus embodying the invention will assure that all upright tubes are cut exactly at the same height to enable a new end structure to be easily fitted thereon.

Preferably, the means for mounting the elongate tube cutters on the cutter carriage comprise holes formed in the latter and sized to receive the individual cutters, and retaining means for securing the cutters in the respective holes against axial movement thereof relative to the cutter carriage. This arrangement permits cutters to be readily mounted, removed or repositioned depending upon the number and locations of tubes to be cut.

In the preferred embodiment still to be described in detail, the actuating means for effecting cutter inserting and cutter withdrawing movements of the cutter carriage is a rotatable shaft which is rotatably connected, such as journalled, to one, and is threadedly engaged with the other, of said mounting and reference structure and said cutter carriage. This rotatable shaft has a first end portion adapted to be engaged with a turning tool for rotating the shaft, and a second end portion disposed adjacent the first end portion and adapted to be engaged with a tool for lowering the cutter guide fixture onto the end structure of the fuel assembly and, after separation thereof from the upright tubes, for lifting it together with the end structure therefrom.

The mounting and reference structure is disposed beneath the cutter carriage and has formed therein a plurality of cutter guide holes through which the respective tube cutters on the carriage extend. In order to protect the tube cutter portions carrying the cutting elements and projecting from the mounting and reference structure, the latter is provided with a protective skirt portion which surrounds said tube cutter portions. The reference means on the mounting and reference structure beneath the cutter carriage is an upper surface of the mounting and reference structure, which upper surface acts as a stop for the carriage upon its movement to the cutter-inserted position thereof. The means for mounting the guide fixture upon, and for locking it to, the upper end structure of the fuel assembly comprise mounting flanges on the mounting and reference structure which are adapted to seat upon mounting pads on the end structure to be removed, and expansion-type locking devices disposed on the respective mounting flanges and engageable with bores in the respective mounting pads, the expansion-type locking devices being expandable into frictional locking engagement with the side walls of the respective bores.

The preferred embodiment will now be described, by way of example, in greater detail and with reference to the accompanying drawings, in which:-

Figure 1 is a perspective view of the apparatus embodying the invention, with parts thereof shown broken away for clarity, and of an upper portion of a nuclear fuel assembly,

Fig. 2 is a side elevational and partly sectional view of the apparatus showing the cutter guide fixture mounted on the upper end structure, or top nozzle, of the fuel assembly, and the cutter carriage in its cutter withdrawn position;

Fig. 3 is a view similar to Fig. 2 but showing the cutter carriage in its cutter-inserted position;

Fig. 4 is a top plan view of the apparatus as shown in Fig. 3;

Fig. 5 is a view similar to Fig. 3 but showing the cutter guide fixture together with the separated end structure lifted from the cut tubes or guide thimbles;

Fig. 6 is a fragmentary, perspective and partly sectional view of the working end of a mounting and lifting tool for use with the cutter guide fixture; and

Fig. 7 is a similar view of the working end of a tool adapted for use in operating the actuating means which moves the cutter carriage.

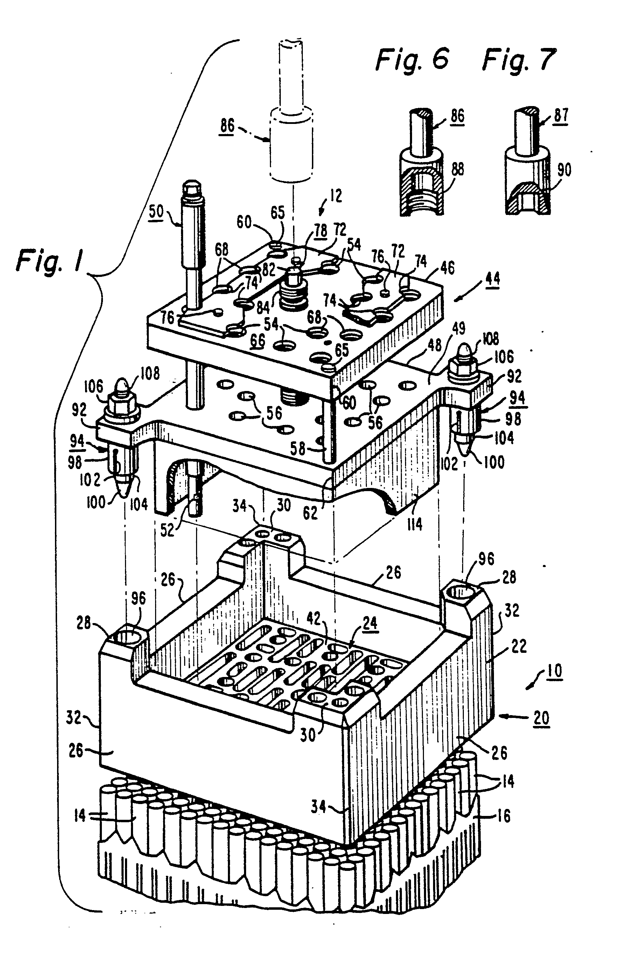

Referring now to the drawings, and particularly to Fig. 1, reference numeral 10 generally designates the fuel assembly partially shown therein, and numeral 12 generally designates the apparatus embodying the invention.

The fuel assembly 10 includes an array of fuel rods 14 held in laterally spaced relationship with respect to one another by transverse grids, such as grid 16, spaced along the fuel assembly. Each fuel rod 14 contains nuclear fuel pellets (not shown) made of fissile material, and is sealed at its opposite ends. When in the core of a nuclear reactor, a liquid moderator/coolant, such as water or water containing boron, is pumped upwardly through the fuel assembly in order to extract heat therefrom for performing useful work.

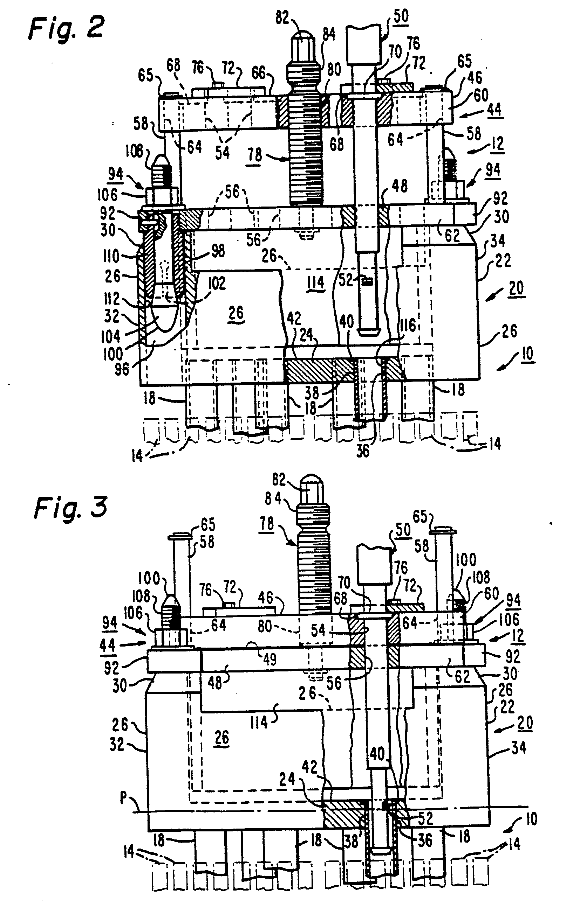

The fuel assembly 10 further includes longitudinally extending guide tubes or thimbles 18 (Figs. 2, 3 and 5) to which the grids 16 are affixed. The guide thimbles 18 extend longitudinally a short distance beyond the fuel rods 14 and are affixed adjacent their opposite ends to a bottom nozzle (not shown) and a top nozzle 20, respectively, forming part of the fuel assembly 10. As well known in the art, the guide thimbles 18 are adapted to receive control rods (not shown) which are movable therein, in a well known manner to control the fission process.

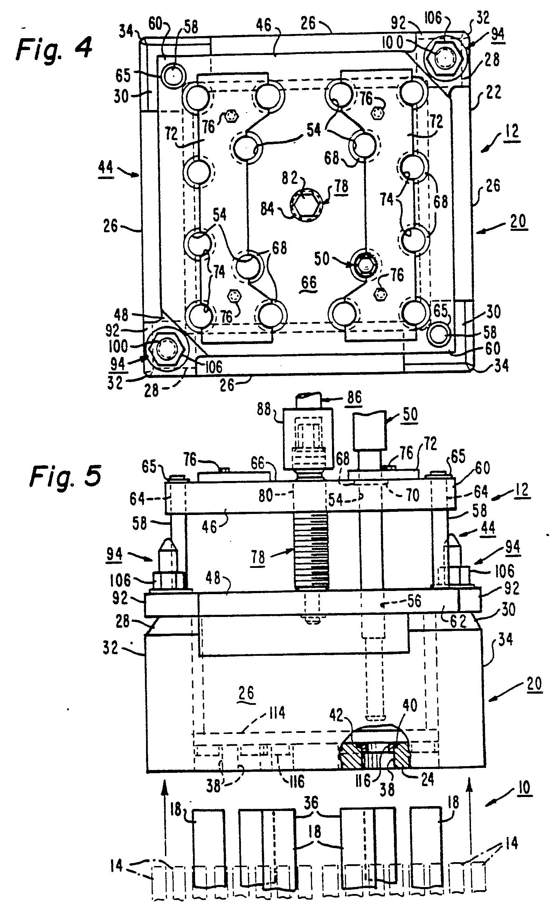

As seen from Figs. 1 and 4, the top nozzle 20 is generally square and comprises a housing 22 having a lower adapter plate 24, and four interconnected, upright side walls 26 with two pairs of raised pads 28, 30 projecting upward therefrom at diagonal corners 32, 34 of the housing 22. Upper end portions 36 of the respective control-rod guide thimbles 18 extend coaxially into control-rod passageways 38 formed through the adapter plate 24 of the top nozzle 20, and they are affixed therein to the adapter plate 24 in a suitable manner, such as by welds 40.

When a decision is made to reconstitute the fuel assembly 10 (which will occur in only a small percentage of fuel assemblies during their useful life), it is necessary to cut the guide thimbles where they are joined to the adapter plate 24, and then to lift the top nozzle off the thimbles 18. The apparatus 12 embodying the invention serves this purpose.

Referring first to Fig. 1, the apparatus 12 comprises a cutter guide fixture 44 comprising a cutter carriage 46 and a mounting and reference structure 48. In the particular embodiment illustrated and to be described, the cutter carriage 46 and the mounting and reference structure 48 are in the form of plates, with the former disposed above the latter, and therefore they will be referred to hereinafter also as the upper and lower plates 46 and 48, respectively. These plates are adapted for use with a full complement of tube cutters, such as cutter 50, i.e. they are adapted for use with as many tubes cutters as there are guide thimbles 18 to be cut in a given type of fuel assembly. Of course, fewer cutters, or even only one cutter, may be employed, if desired. A single cutter 50, only, is shown herein as this will suffice for a clear understanding of the invention. This cutter 50, having a cutting element 52, may be a precision tube cutter such as disclosed in Applicant's copending European patent application No. 84307172.1 (EP—A—0,145,185).

The lower plate 48 has thereon, adjacent two diagonal corners 62 thereof, a pair of upright guide pins 58 which extend slidably through two correspondingly shaped and sized openings 64 (see Fig. 2) formed in the upper plate 46 adjacent the corresponding diagonal corners 60 thereof. The guide pins 58 guide the upper plate 46 for up and down movement thereof away from and toward, respectively, the lower plate 48, the upward movement of the plate 46 being limited by stops in the form of enlargements 65 formed on the upper ends of the guide pins.

The upper plate 46 has formed therethrough a plurality of holes 54, one for each cutter 50, and the lower plate 48 has therethrough similar holes 56 which are axially aligned with the respective holes 54 in the upper plate, each pair of aligned holes 54, 56 being adapted to receive a cutter 50. The cutters 50 are slideable in the holes 56 of the lower plate 48 and are connected to the upper plate 46 for movement therewith. For this purpose, each hole 54 in the plate 46 is recessed at the upper end to form a peripheral shoulder 68 (Fig. 2) upon which rests a radial flange 70 provided on the cutter 50 about one-third of its length down from its upper end. A pair of keeper plates 72 disposed on the upper surface 66 of the upper plate 46 and fastened thereto by means of screws 76 have recesses 74 formed in outer edge portions thereof, each of which recesses 74 overlies approximately one-half of the periphery of the recessed end of one of the holes 54 and of the radial flange 70 of the cutter 50 seated therein, thereby, together with the shoulder 68 in the recessed hole 54, locking the cutter 50 to the upper plate 46 for movement simultaneously and in unison therewith.

The cutter guide fixture 44 includes further a threaded central shaft or drive screw 78 which is rotatably supported in the lower plate 48 and, extending upwardly and through an internally threaded opening 80 in the upper plate 46, is threadedly engaged with the latter such that rotation of the shaft 78 in opposite directions will cause the upper plate 46 to move up and down, respectively, between an upper or cutter-disengaged position (Fig. 2) and a lower or cutter-engaged position adjacent the lower plate 48 (Fig. 3).

Adjacent its upper end, the threaded shaft 78 has formed thereon a hexagonal head 82 and immediately below it a threaded head 84 larger in cross-section than the hex head 82. There are provided two long-handled tools 86, 87, one 86 of which has an internally threaded female socket 88 adapted to be threadedly engaged with the threaded head 84 of the drive shaft 78, and the other 87 of which tools has a hex-shaped female socket 90 adapted to be engaged with the hex head 82 of the drive shaft 78. The tool 86 is used for installing and lifting the guide fixture 44 on and from the top nozzle 20, whereas the tool 87 is used for rotating the threaded drive shaft 78 so as to lower and raise the upper plate 46 together with the cutters 50 thereon relative to the lower plate 48.

The cutter guide fixture 44 is adapted to be mounted on and to be locked to the top nozzle 20. For this purpose, the lower plate 48 has two diagonal corner extensions 92 each supporting an expansion-type locking device 94 which is mateable with one of two bores 96 formed in the respective corner pads 28 of the top nozzle 20. Each of the locking devices 94 comprises a split sleeve 98 attached to the associated extension 92, and a wedge pin 100 inserted into the sleeve 98 is provided with several longitudinal slots 102 which enable said lower end portion to be radially expanded when an enlarged conical head 104 on the lower end of the wedge pin 100 is drawn up and into the split sleeve upon tightening of a nut 106 on a threaded upper end portion 108 of the pin 100. Expansion of the sleeve 98 creates a tight friction fit between its outer surface 110 and the inner surface 112 of the bore 96, whereby the fixture 44 is locked to the top nozzle 20.

The lower plate 48 includes a continuous skirt 114 which depends from the perimeter thereof and surrounds the lower portions of the cutters 50, thereby protecting their cutting elements 52 from accidental damaging contact with the top nozzle 20 as the fixture 44 is being mounted thereon. The skirt has an outer perimeter sized to fit within the nozzle housing 22 when the corner extensions 92 on the lower plate 48 are brought into a rest position on the corner pads 28 of the top nozzle 20.

When it is desired to remove the top nozzle 20 from the fuel assembly 10 having its guide thimbles 18 welded to the adapter plate 24 of the top nozzle 20, the fuel assembly is removed from the reactor core and placed in an upright position into a work station. With preferably a full complement of cutters 50 mounted on the cutting guide fixture 44, the long-handled tool 86 with the threaded socket 88 is then threaded onto the head 84 of the central shaft 78, and the fixture 44 is lowered toward the top nozzle 20 as the lower portions of the locking device 94 on the lower plate 48 are being visually guided into the bores 96 of the corner pads 28 on the top nozzle 20. Once the fixture 44 is seated upon the four corner pads 28, 30 of the top nozzle 20, another long-handled socket tool (not shown but similar to tool 87) is employed to tighten the nuts 106, such as to a torque of 3.5 kg-m, and thereby to spread the split sleeves 98 into locking engagement with the inner walls of the bores 96 in the manner described above. This secures the guide fixture 44 firmly to the nozzle 20.

Once this is done, the tool 86 is disengaged from the shaft 78 and the tool 87 with the hex socket 90 is applied to the hex head 82 of the shaft 78, whereupon the tool and, consequently, the shaft are rotated to lower the upper plate 46 until it rests upon the lower plate 48. During this downward movement of the upper plate 46, the cutters 50 thereon are lowered from their retracted position (Fig. 2), in which their tips are above the nozzle adapter plate 24 and above the lower edge of the skirt 114, to an inserted position (Fig. 3) in which the cutters extend into the upper end portions 36 of the guide thimbles 18 within the passageways 38 of the adapter plate 24 which are axially aligned with the respective cutters 50. With the upper surface 49 (Figs. 1, 3) of the lower plate 48 serving as a fixed reference in positioning the lowered upper plate 46 carrying the cutters 50, all of the latter will have their cutting elements 52 disposed in a common cutting plane P (Fig. 3) when the upper plate 46 is seated upon the lower plate 48. Preferably, this cutting plane P lies about 3 mm below the upper surface 42 of the adapter plate 24. With the cutters 50 thus positioned to have their cutting elements 52 in the common plane P, the cuts can be made by applying a long-handled cutter operating tool (not shown but similar to the tool 87) successively to one cutter 50 after another and each time operating it to cause its cutting element 52, as described in Applicant's aforesaid copending patent application, to cut circumferentially through the respective guide thimble 18, thereby severing therefrom an upper marginal portion 116 (Fig. 5).

After all of the cutters 50 have been thus operated to complete all cuts, the tool 87 is reapplied to the drive shaft 78 and is rotated to return the upper plate 46 from its lower or cutter-inserted position, shown in Fig. 3, to its upper or cutter-withdrawn position shown in Fig. 2, thereby to withdraw all of the cutters 50 from the respective guide thimbles 18. Thereafter, the installing and lifting tool 86 is reapplied to the drive shaft 78 and threadedly engaged with its threaded head 84, whereupon the whole fixture 44 together with the entire top nozzle 20 (which is still affixed to the fixture 44 but now is detached from the guide thimbles 18) is lifted from the fuel assembly 10, as illustrated in Fig. 5. It will be noted from the latter that the severed margins 116 of the guide thimbles 18 remain attached to the adapter plate 24 of the top nozzle 20 as the nozzle is removed. After removal of the top nozzle 20 from the fuel assembly 10, the cutter guide fixture 44 is released therefrom by loosening the nuts 106 of the respective locking devices 94.

With the top nozzle 20 now off the fuel assembly 10, the fuel rods 14 in the latter are exposed for inspection and removal. If the fuel assembly is to be reconstituted for further use, a new top nozzle will be mounted on and attached to the guide thimbles 18 in a manner as described in Applicant's Belgian patent specification No. BE—A—897,818, for example. Since the apparatus embodying the invention assured that the tops of the guide thimbles 18 were all cut in one common plane P, the new top nozzle can be mounted on and attached to the guide thimbles with relative ease.

## Claims

1. Apparatus for separating an upper end structure (20) of a nuclear fuel assembly from upright tubes (18) forming part of the fuel assembly and having upper end portions thereof inserted in passageways formed through a structural plate (24) which is a unitary part of the end structure (20) and is rigidly connected to the upright tubes adjacent the uppermost ends (36) thereof, said apparatus being adapted for use with elongate tube cutters (50) insertable into said upright tubes and including cutting elements (52) which are operable to cut circumferentially through the tubes, characterized by a cutter guide fixture (44) comprising a mounting and reference structure (48) including means (92, 94) for mounting the guide fixture (44) on top of, and for releasably locking it to, said upper end structure (20); a cutter carriage (46) which is movable between a cutter-inserted position and a cutter-withdrawn position and includes means (54, 72) for mounting the elongate tube cutters (50) on the carriage in a manner and in positions such that any tube cutter (50) on the carriage will move axially together and in unison therewith and be in axial alignment with one of said passageways (38) in the structural plate (24) when the guide fixture (44) is mounted on the end structure (20), and that, furthermore, the cutting elements (52) of all cutters (50) on the carriage are laterally aligned with respect to each other; and actuating means (78) operable to effect movement of the cutter carriage (46) between said cutter-inserted and cutter-withdrawn positions thereof and thereby, when the guide fixture (44) is mounted on the end structure, to effect insertion and withdrawal, respectively, of the cutters into and from the tube end portions within the respective passageways (38) aligned therewith; said mounting and reference structure (48) including a reference means (49) cooperable with the cutter carriage (46) to terminate movement thereof to its cutter-inserted position when the cutter elements of all cutters are disposed in a common plane P intersecting said tube end portions below their points (40) of rigid connection with said structural plate (24).

2. Apparatus according to claim 1, characterized in that said means (54, 72) for mounting the elongate tube cutters (50) on the cutter carriage (46) comprises a plurality of holes (54) which extend through the cutter carriage in the direction of its movements and are sized to receive the individual cutters, and retaining means (68, 70, 72) for securing the cutters in the respective holes (54) against axial movement thereof relative to the cutter carriage.

3. Apparatus according to claim 1 or 2, characterized in that said actuating means (78) comprises a rotatable shaft rotatably conected to one, and threadedly engaged with the other, of said mounting and reference structure (48) and said cutter carriage (46), the arrangement being such that rotation of the shaft in one direction effects movement of the cutter carriage toward its cutter-inserted position, and rotation of the shaft in the opposite direction effects movement of the cutter carriage toward its cutter-withdrawn position.

4. Apparatus according to claim 3, characterized in that said rotatable shaft (78) has a first end portion (82) which is adapted to be engaged with a turning tool (87) for rotating the shaft, and a second end portion (84) disposed adjacent said first end portion and adapted to be engaged with a tool (86) for lowering said cutter guide fixture (44) onto the upper end structure (20) of the fuel assembly, and for lifting the cutter guide fixture together with the end structure (20) releasably locked thereto from the fuel assembly after separation of the end structure from said upright tubes (18).

5. Apparatus according to claim 3 or 4, characterized by a pair of guide pins (58) extending parallel with respect to said rotatable shaft (78) and each of which is secured to one, and slideably extends through a guide hole in the other, of said mounting and reference structure (48) and said cutter carriage (46).

6. Apparatus according to claim 1, 2, 3, 4 or 5, characterized in that said mounting and reference structure (48) is disposed beneath the cutter carriage (46) and has formed therein a plurality of cutter guide holes (56) having the respective tube cutters (50) on the carriage (46) movably extending therethrough.

7. Apparatus according to claim 6, characterized in that said mounting and reference structure (48) includes a protective skirt portion (114) which surrounds all of the tube cutter portions projecting from the mounting and reference structure and including the cutting elements (52).

8. Apparatus according to claim 6 or 7, characterized in that said reference means (49) is a surface portion of the mounting and reference structure (48) acting as a stop for the cutter carriage (46).

9. Apparatus according to claim 6, 7 or 8, characterized in that said mounting and reference structure (48) comprises a plate having an upper surface (49) which acts as a stop for the cutter carriage (46) and constitutes said reference means.

10. Apparatus according to any one of the preceding claims, characterized in that said means (92, 94) for mounting the guide fixture (44) on, and for locking it to, said upper end structure (20) comprise mounting flanges (92) on the mounting and reference structure (48) adapted to be seated upon mounting pads (28) on said upper end structure (20), and expansion-type locking devices (94) disposed on the respective mounting flanges (92) and engageable with bores (96) in the respective mounting pads (28), each of said expansion-type locking devices (94), when engaged with the bore (96) of the associated mounting pad (28), being operable so as to be expanded into frictional locking engagement with the side walls of said bore.

**Patentansprüche**

1. Vorrichtung zum Abtrennen der oberen Endkonstruktion (20) eines Kernbrennelements von Teil des Brennelements bildenden vertikalen Rohren (18), deren obere Endteile in Durchgangsbohrungen einer Konstruktionsplatte (24) eingesetzt sind, die einen einheitlichen Teil der Endkonstruktion (20) bildet und mit den vertikalen Rohren an deren obersten Enden (36) starr verbunden ist, wobei die Vorrichtung für den Gebrauch mit länglichen Rohrschneidwerkzeugen (50) ausgebildet ist, die in die vertikalen Rohre einführbar sind und Schneidelemente (52) aufweisen, die im Sinne eines Umfangsschnittes durch die Rohre betätigbar sind, gekennzeichnet durch eine Schneidwerkzeug-Führungshalterung (44) mit einer Montage- und Bezugskonstruktion (48), die Mittel (92, 94) zur Montage und lösbaren Verriegelung der Führungshalterung (44) oben auf der oberen Endkonstruktion (20) aufweist, weiter durch einen Schneidwerkzeugschlitten (46), der zwischen einer eingeführten und einer herausgezogenen Schneidwerkzeugposition bewegbar ist und Mittel (54, 72) zur Montage der länglichen Rohrschneidwerkzeuge (50) auf dem Schlitten in einer solchen Weise und an solchen Positionen aufweist, daß jedes Rohrschneidwerkzeug (50) auf dem Schlitten axial zusammen und gemeinsam damit verschiebbar ist und axial fluchtend mit einer der Bohrungen (38) der Konstruktionsplatte (24) ist, wenn die Führungshalterung (44) auf der Endkonstruktion (20) montiert ist, und daß außerdem die Schneidelemente (52) aller Schneidwerkzeuge (50) auf dem Schlitten seitlich mit Bezug zueinander ausgerichtet sind, und durch Betätigungsmittel (78) zur Bewegung des Schneidwerkzeugschlittens (46) zwischen der eingeführten und der herausgezogenen Werkzeugposition und folglich, wenn die Führungshalterung (44) auf der Endkonstruktion montiert ist, zum Herbeiführen des Einführens bzw. Herausziehens der Schneidwerkzeuge in bzw. aus den Rohrendteilen in den betreffenden damit fluchtenden Bohrungen (38), wobei die Montage- und Bezugskonstruktion (48) ein mit dem Schneidwerkzeugschlitten (46) zusammenwirkendes Bezugsorgan (49) aufweist, das dessen Bewegung in die eingeführte Schneid-

werkzeugposition beendet, wenn die Schneid-elemente aller Schneidwerkzeuge in einer gemeinsamen Ebene (P) angeordnet sind, welche die Rohrendteile unterhalb ihrer Stellen (40) der starren Verbindung mit der Konstruktionsplatte (24) schneidet.

2. Vorrichtung nach Anspruch 1, dadurch gekennzeichnet, daß die Mittel (54, 72) zur Montage der länglichen Rohrschneidwerkzeuge (50) auf dem Schneidwerkzeugschlitten (46) eine Mehrzahl von Öffnungen (54) aufweisen, die in Bewegungsrichtung durch den Schneidwerkzeugschlitten hindurchverlaufen und für die Aufnahme der einzelnen Schneidwerkzeuge bemessen sind, und Haltemittel (68, 70, 72) zur Befestigung der Schneidwerkzeuge in den betreffenden Öffnungen (54) gegen eine axiale bewegung relativ zum Schneidwerkzeugschlitten aufweisen.

3. Vorrichtung nach Anspruch 1 oder 2, dadurch gekennzeichnet, daß die Betätigungsmittel (78) eine drehbare Welle aufweisen, die mit einem der Bauteile Montage- und Bezugskonstruktion (48) und Schneidwerkzeugschlitten (46) drehbar verbunden und mit dem anderen verschraubt ist, wobei die Anordnung so getroffen ist, daß eine Drehung der Welle in einer Richtung eine Bewegung des Schneidwerkzeugschlittens in seine Werkzeugeinführposition und eine Drehung der Welle in der entgegengesetzten Richtung eine Bewegung des Schneidwerkzeugschlittens in seine Werkzeugzurückziehposition bewirkt.

4. Vorrichtung nach Anspruch 3, dadurch gekennzeichnet, daß die drehbare Welle (78) einen ersten Endteil (82) aufweist, der mit einem Drehwerkzeug (87) zum Drehen der Welle in Eingriff bringbar ist, und einen zweiten Endteil (84) angrenzend an den ersten Endteil aufweist, der für einen Eingriff mit einem Werkzeug (86) zum Absenken der Schneidwerkzeug-Führungshalterung (44) auf die obere Endkonstruktion (20) des Brennelements und zum Anheben der Schneidwerkzeug-Führungshalterung zusammen mit der damit lösbar verriegelten Endkonstruktion (20) von dem Brennelement nach Abtrennen der Endkonstruktion von den vertikalen Rohren (18) ausgebildet ist.

5. Vorrichtung nach Anspruch 3 oder 4, gekennzeichnet durch zwei Führungsstifte (58), die parallel mit Bezug auf die drehbare Welle (78) verlaufen und jeweils an einem der Bauteile Montage- und Bezugskonstruktion (48) und Schneidwerkzeugschlitten (46) befestigt sind sowie verschiebbar durch eine Führungsbohrung im jeweils anderen Bauteil hindurchragen.

6. Vorrichtung nach Anspruch 1, 2, 3, 4 oder 5, dadurch gekennzeichnet, daß die Montage- und Bezugskonstruktion (48) unterhalb des Schneidwerkzeugschlittens (46) angeordnet ist und eine Mehrzahl darin gebildeter Schneidwerkzeug-Führungsbohrungen (56) aufweist, durch welche die Rohrschneidwerkzeuge (50) auf dem Schlitten (46) verschiebbar hindurchragen.

7. Vorrichtung nach Anspruch 6, dadurch gekennzeichnet, daß die Montage- und Bezugskonstruktion (48) einen schützenden Schürzenteil (114) aufweist, der sämtliche von der Montage- und Bezugskonstruktion wegragende Rohrschneidwerkzeugteile einschließlich der Schneidelemente (52) umschließt.

8. Vorrichtung nach Anspruch 6 oder 7, dadurch gekennzeichnet, daß die Bezugsmittel (49) ein Oberflächenteil der Montage- und Bezugskonstruktion (48) sind, die als Anschlag für den Schneidwerkzeugschlitten (46) dient.

9. Vorrichtung nach Anspruch 6, 7 oder 8, dadurch gekennzeichnet, daß die Montage- und Bezugskonstruktion (48) eine Platte mit einer Oberseite (49) aufweist, die als Anschlag für den Schneidwerkzeugschlitten (46) dient und die Bezugsmittel bildet.

10. Vorrichtung nach einem der vorhergehenden Ansprüche, dadurch gekennzeichnet, daß die Mittel (92, 94) zur Montage der Führungshalterung (44) und zur Verriegelung derselben auf der oberen Endkonstruktion (20) Montageflansche (92) an der Montage- und Bezugskonstruktion (48) aufweist, die für ein Aufsetzen auf Montageklötze (28) auf der oberen Endkonstruktion (20) ausgebildet sind, und daß Verriegelungsvorrichtungen (94) einer Aufweitungsbauart auf den betreffenden Montageflanschen (92) angeordnet und mit Bohrungen (96) in den betreffenden Montageklötzen (28) in Eingriff bringbar sind, wobei die Verriegelungsvorrichtungen (94) bei Eingriff in der Bohrung (96) des betreffenden Montageklotzes (28) im Sinne einer Aufweitung in reibschlüssigen Arretierungseingriff mit den Seitenwänden der Bohrung betätigbar ist.

**Revendications**

1. Dispositif pour séparer une structure d'extrémité supérieure (20) d'un assemblage combustible nucléaire de tubes verticaux (18) qui font partie de l'assemblage combustible et dont des parties d'extrémité supérieures sont insérées dans des passages ménagés à travers une plaque structurale (24) qui constitue un élément unitaire de la structure d'extrémité (20) et qui est rigidement reliée aux tubes verticaux au voisinage de leurs extrémités supérieures (36), ledit dispositif étant adapté pour être utilisé avec des coupe-tube (50) de forme allongée pouvant être insérés dans lesdits tubes verticaux et comportant des éléments de coupe (52) adaptés pour couper circonférentiellement à travers les tubes, caractérisé en ce qu'il comporte un dispositif (44) de guidage de coupe-tube comprenant une structure (48) de montage et de référence comportant des moyens (92, 94) pour monter le dispositif de guidage (44) sur le dessus de ladite structure d'extrémité supérieure (20) et le verrouiller sur celle-ci de façon libérable; un support (46) de coupe-tube qui est apte à se déplacer entre une position coupe-tube insérés et une position coupe-tube retirés et qui comporte des moyens (54, 72) pour monter les coupe-tube (50) de forme allongée sur le support d'une manière et dans des positions telles qu'un coupe-tube quelconque (50) situé sur le support puisse se déplacer axialement, avec et en même temps que celui-ci, et soit aligné axialement avec l'un desdits orifices (38) de la plaque structurale (24) lorsque le dispositif de guidage (44) est monté sur la structure d'extrémité (20), et, en outre, telles que les éléments de coupe (52) de tous les coupe-tube (50) situés sur le support soient alignés latéralement les uns par rapport aux autres; et des moyens d'actionnement (78) adaptés pour opérer le déplacement du support de coupe-tube (46) entre ses dites positions coupe-tube insérés et coupe-tube retirés et pour assurer ainsi, lorsque le dispositif de guidage (44) est monté sur la structure d'extrémité, l'introduction et le retrait, respectivement, des coupe-tube dans et hors des parties d'extrémité de tube à l'intérieur des orifices respectifs (38) alignés avec ceux-ci; ladite structure (48) de montage et de référence comportant un moyen de référence (49) apte à coopérer avec le support (46) de coupe-tube pour achever son déplacement jusqu'à sa position coupe-tube insérés lorsque les éléments de coupe de tous les coupe-tube sont disposés dans un plan commun (P) intersectant lesdites parties d'extrémité de tube en dessous de leurs points (40) de raccord rigide avec ladite plaque structurale (24).

2. Dispositif selon la revendication 1, caractérisé en ce que lesdits moyens (54, 72) de montage des coupe-tube (50) de forme allongée sur le support de coupe-tube (46) sont constitués par plusieurs trous (54) qui s'étendent à travers le support de coupe-tube dans la direction de son déplacement et qui sont dimensionnés pour pouvoir recevoir les coupe-tube individuels, et par des moyens de retenue (68, 70, 72) destinés à fixer en place les coupe-tube dans les trous respectifs (54) et empêcher leur mouvement axial par rapport au support de coupe-tube.

3. Dispositif selon la revendication 1 ou 2, caractérisé en ce que lesdits moyens d'actionnement (78) sont constitués par un arbre rotatif relié à rotation à l'un ou l'autre de ladite structure (48) de montage et de référence et dudit support (46) de coupe-tube, et étant vissé avec l'autre, la disposition étant telle que la rotation de l'arbre dans un sens entraîne le déplacement du support de coupe-tube vers sa position coupe-tube insérés, et la rotation de l'arbre dans l'autre sens entraîne le déplacement du support de coupe-tube vers sa position coupe-tube retirés.

4. Dispositif selon la revendication 3, caractérisé en ce que ledit arbre rotatif (78) comporte une première partie d'extrémité (82) apte à venir en prise avec un outil tournant (87) pour faire tourner l'arbre, et une seconde partie d'extrémité (84) adjacente à la dite première partie d'extrémité et apte à s'engager avec un outil (86) pour abaisser ledit dispositif (44) de guidage de coupe-tube sur la structure d'extrémité supérieure (20) de l'assemblage combustible, et pour soulever le dispositif de guidage de coupe-tube en même temps que la structure d'extrémité (20) qui est verrouillée sur lui de manière libérable pour l'éloigner de l'assemblage combustible après que la structure d'extrémité et lesdits tubes verticaux (18) ont été séparés.

5. Dispositif selon la revendication 3 ou 4, caractérisé en ce qu'il comporte une paire d'axes de guidage (58) s'étendant parallèlement audit arbre rotatif (78), chacun d'eux étant fixé à l'un ou l'autre de ladite structure (48) de montage et de référence et dudit support (46) de coupe-tube, et s'étendant à coulissement à travers un trou de guidage de l'autre.

6. Dispositif selon la revendication 1, 2, 3, 4 ou 5, caractérisé en ce que ladite structure (48) de montage et de référence est disposée en dessous du support (46) de coupe-tube et comporte plusieurs trous (56) de guidage de coupe-tube dans lesquels s'étendent, de manière à être mobiles, les coupe-tube respectifs (50) montés sur le support (46).

7. Dispositif selon la revendication 6, caractérisé en ce que la structure (48) de montage et de référence comporte une partie de jupe de protection (114) qui entoure toutes les parties des coupe-tube qui font saillie de la structure de montage et de référence et qui comportent les élémants de coupe (52).

8. Dispositif selon la revendication 6 ou 7, caractérisé en ce que ledit moyen de référence (49) est une partie de surface de la structure (48) de montage et de référence et joue le rôle de butée pour le support de coupe-tube (46).

9. Dispositif selon la revendication 6, 7 ou 8, caractérisé en ce que ladite structure (48) de montage et de référence se compose d'une plaque dont la surface supérieure (49) joue le rôle de butée pour le support (46) de coupe-tube et constitue ledit moyen de référence.

10. Dispositif selon l'une quelconque des revendications précédentes, caractérisé en ce que lesdits moyens (92, 94) de montage du dispositif de guidage (44) sur ladite structure (20) d'extrémité supérieure et de verrouillage sur cette dernière se composent de brides de montage (92) situées sur la structure (48) de montage et de référence et adaptées pour être reçues sur des blocs de montage (28) de ladite structure (20) d'extrémité supérieure, et de dispositifs de blocage (94) du type à expansion, disposés sur les brides de montage (92) respectives et aptes à s'engager dans des alésages (96) dans les blocs de montage (28) respectifs, chacun desdits dispositifs de blocage (94) du type à expansion, lorsqu'il est engagé dans l'alésage (96) du bloc de montage (28) associé, étant apte à se dilater pour se bloquer par friction contre les parois latérales dudit alésage.

Fig. 6    Fig. 7

Fig. 1

1

*Fig. 2*

*Fig. 3*

EP 0 175 974 B1

Fig. 4

Fig. 5

3